(19) Europäisches Patentamt
European Patent Office
Office européen des brevets

(11) EP 2 527 483 B1

(12) EUROPEAN PATENT SPECIFICATION

(45) Date of publication and mention
of the grant of the patent:
**13.04.2022  Bulletin 2022/15**

(21) Application number: **11734789.8**

(22) Date of filing: **18.01.2011**

(51) International Patent Classification (IPC):
$C22C\ 38/00^{(2006.01)}$     $C22C\ 38/02^{(2006.01)}$
$C22C\ 38/04^{(2006.01)}$     $C22C\ 38/06^{(2006.01)}$
$C22C\ 38/08^{(2006.01)}$     $C22C\ 38/12^{(2006.01)}$
$C22C\ 38/14^{(2006.01)}$     $C22C\ 38/16^{(2006.01)}$
$C22C\ 38/38^{(2006.01)}$     $C22C\ 38/60^{(2006.01)}$
$C23C\ 2/06^{(2006.01)}$     $C23C\ 2/28^{(2006.01)}$
$C21D\ 9/46^{(2006.01)}$     $C21D\ 8/02^{(2006.01)}$
$B32B\ 15/01^{(2006.01)}$

(52) Cooperative Patent Classification (CPC):
**C23C 2/06; B32B 15/013; C21D 8/0205;
C21D 9/46; C22C 38/001; C22C 38/002;
C22C 38/008; C22C 38/02; C22C 38/04;
C22C 38/06; C22C 38/08; C22C 38/12;
C22C 38/14; C22C 38/16; C22C 38/38;**     (Cont.)

(86) International application number:
**PCT/JP2011/051157**

(87) International publication number:
**WO 2011/090183 (28.07.2011 Gazette 2011/30)**

(54) **HIGH-STRENGTH HOT-DIP GALVANIZED STEEL SHEET REDUCED IN BURR FORMATION AND PROCESS FOR PRODUCING SAME**

HOCHFESTES FEUERVERZINKTES STAHLBLECH MIT REDUZIERTER GRATBILDUNG UND VERFAHREN ZU SEINER HERSTELLUNG

TÔLE EN ACIER GALVANISÉ AU TREMPÉ À HAUTE RÉSISTANCE PRÉSENTANT UNE FORMATION DE BAVURES RÉDUITE ET PROCÉDÉ DE PRODUCTION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2010  JP 2010262090
22.01.2010  JP 2010011949**

(43) Date of publication of application:
**28.11.2012  Bulletin 2012/48**

(73) Proprietor: **JFE Steel Corporation**
**Tokyo, 100-0011 (JP)**

(72) Inventors:
• **NAGATAKI, Yasunobu**
**Tokyo 100-0011 (JP)**
• **KAWASAKI, Yoshiyasu**
**Tokyo 100-0011 (JP)**
• **NAKAGAITO, Tatsuya**
**Tokyo 100-0011 (JP)**
• **KANEKO, Shinjiro**
**Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 1 577 412       WO-A1-2009/099251
WO-A1-2010/098416    JP-A- 2001 192 767
JP-A- 2006 265 671    JP-A- 2008 291 304
JP-A- 2008 291 304    JP-A- 2009 149 938
JP-A- 2009 209 451    JP-A- 2010 255 097
US-B1- 6 517 955**

(52) Cooperative Patent Classification (CPC): (Cont.)
**C22C 38/60;** C21D 2211/002; C21D 2211/005;
C21D 2211/009

## Description

[Technical Field]

The present invention relates to a steel sheet having excellent anti-burring performance in processing and a method for manufacturing the same. After punching, shearing, or another processing, the steel sheet can be used in automobiles, household electrical appliances, and other applications.

[Background Art]

Steel sheets are widely used in automobiles, household electrical appliances, and furniture and are generally subjected to blank processing, forming, and then assembling to manufacture desired products and components. In recent years, as products have become more complicated or have come to possess superior functionality, there has been a growing demand in particular for higher final precision. The formation of a burr on an end face in punching reduces the final precision of components. A large burr results in a critically low precision in a final assembling process. In automobiles, a burr would leave a gap between superposed steel sheets, which may have a serious influence on the functionality of a component, such as lowering corrosion resistance. In light of such a background, for example, Patent Literatures 1, 2, and 3 disclose a technique for reducing the height of a burr in punching. These techniques basically utilize an inclusion, such as one composed of sulfide or phosphide, dispersed in a steel sheet as a starting point or a propagation path of a crack in punching, or utilize hardening of a surface layer of a steel sheet to promote the development of a crack, thereby reducing the burr height.

[Citation List]

[Patent Literature]

[PTL 1] Japanese Unexamined Patent Application Publication No. 1-230748
[PTL 2] Japanese Unexamined Patent Application Publication No. 4-120242
[PTL 3] Japanese Unexamined Patent Application Publication No. 6-73457

WO 2010/098416 A1 belonging to the same patent family with  EP2402470 A1 discloses a high strength galvanized steel sheet with excellent workability having a microstructure including 70% or more of ferrite phase, 2% to 10% of bainite phase, and 0% to 12% of pearlite phase on an area fraction basis and 1% to 8% or less of retained austenite phase on a volume fraction basis, 1% to 5% of martensitic phase, wherein an average crystal grain diameter of ferrite is 18 $\mu$m or less and an average crystal grain diameter of retained austenite is 2 $\mu$m or less an wherein the zinc coating is an alloyed zinc coating.

JP 2008 291 304 A discloses a hot dip galvanized steel sheet having an improved balance between strength and ductility, having a microstructure composed of ferrite having $\geq$70% volume ratio as the main phase and a second phase having an average grain diameter $\leq$ 3 $\mu$m containing a retained austenite having at least $\geq$ 3% volume ratio.

[Summary of Invention]

[Technical Problem]

In the automobile industry, with tightening of $CO_2$ emission control, high-strength steel sheets (high-tensile steel sheets) are increasingly employed. However, high-tensile steel sheets contain a greater amount of alloying elements, such as C, Si, and Mn, than low-strength materials and tend to have poor weldability. However, a positive addition of S or P so as to utilize a relatively large inclusion, such as one composed of sulfide or phosphide, as in the related art results in poorer weldability. When high-tensile steel sheets are used in automotive parts, the addition of S or P therefore jeopardizes the safety of occupants in a collision. Thus, it is necessary to provide a high-strength steel sheet that has excellent anti-burring performance with a low burr height, without positive addition of S or P, which impairs weldability.

In the following a galvanized steel sheet refers to a galvanized and alloyed steel sheet.

Accordingly, it is an object of the present invention to provide a high-strength galvanized steel sheet having a tensile strength of 550 MPa or more and excellent anti-burring performance with a low burr height, without positive addition of S or P, which impairs weldability, and a method for manufacturing the high-strength galvanized steel sheet. The application of high-strength galvanized steel sheets having a tensile strength of 550 MPa will particularly increase in the future.

[Solution to Problem]

The present inventors conducted extensive studies on the effects of the constituents of a galvanized high-tensile steel sheet on the burr height in punching. As a result, the present inventors found that the anti-burring performance of a galvanized high-tensile steel sheet can be improved on the basis of a technical idea that is different from the improvement of anti-burring performance utilizing an inclusion, such as one composed of sulfide or phosphide, in the related art described above. More specifically, the anti-burring performance can be improved when the galvanized high-tensile steel sheet contains ferrite having a high work hardening rate that contains Si as a main constituent, the area ratio of a martensite phase is reduced, and the area ratio of a bainitic ferrite and pearlite structure is controlled.

The present invention is based on this finding and is defined in the claims.

[Advantageous Effects of Invention]

The present invention can provide a high-strength galvanized steel sheet that has excellent anti-burring performance with a low burr height in punching or shearing and has a tensile strength of 550 MPa or more. Such a steel sheet is suitable for automobiles, household electrical appliances, and other applications.

[Brief Description of Drawings]

[Fig. 1] Fig. 1 is a graph showing the effect of the constituent ratio on the burr height.
[Fig. 2] Fig. 2 is a graph showing the burr height as a function of a holding condition at a temperature in the range of 500°C to 600°C in alloying in a continuous galvanizing line.

[Description of Embodiments]

A high-strength galvanized steel sheet according to the present invention has a coating layer formed by galvanizing on a steel sheet having the following components and constituents. The components, constituents, and manufacturing conditions will be described below. In the present specification, the percentages with respect to steel components are based on mass.

1. Composition

C: 0.04% or more and 0.13% or less

It is difficult to achieve a desired steel strength at a C content of less than 0.04%. A C content of more than 0.13% results in an excessive increase in the area ratio of the pearlite phase or the area ratio of the martensite phase, making it impossible to provide the advantages of the present invention. Thus, the C content is 0.04% or more and 0.13% or less.

Si: 1.0% or more and 2.3% or less

Si is an important additive element in the present invention. The addition of Si can increase the work hardening rate of the ferrite phase, promote uniform hardening of a portion subjected to localized large deformation, such as an end face in punching, and provide a uniform fracture surface and a low burr height. A Si content of less than 1.0% results in an insufficient work hardening rate of the ferrite phase. A Si content of more than 2.3% results in the saturation of these effects and a decrease in the toughness of a steel sheet, which results in an undesirable shape of an end face in punching. Thus, the Si content is 1.0% or more and 2.3% or less.

Mn: 0.8% or more and 2.0% or less

Mn is an indispensable element for increasing the strength of a steel sheet. A desired strength cannot be obtained at a Mn content of less than 0.8%. On the other hand, an excessive addition of Mn results in excessively high quenching hardenability of a steel sheet, a high area ratio of the martensite phase, and poor anti-burring performance. Thus, the Mn content is 0.8% or more and 2.0% or less.

P: 0.05% or less

P deteriorates weldability and should be 0.05% or less.

S: 0.0010% or more and 0.01% or less

The addition of S can increase the volume percentage of sulfide, which serves as a starting point or a propagation path of a crack in punching, thus reducing the average burr height. However, it is difficult to prevent the formation of a burr at a S content of less than 0.0010% even if the structure is appropriately controlled. Thus, the lowest S content is 0.0010%. On the other hand, an excessively high S content results in poor weldability. Thus, the highest S content should be 0.01%.

Al: 0.01 to 0.1%

An Al content of more than 0.1% results in the formation of coarse $Al_2O_3$ and deterioration in the quality of the material. In the case that Al is added to deoxidize steel, the addition of less than 0.01% Al results in much coarse oxide, for example, of Mn or Si, dispersed in steel, which causes deterioration in the quality of the material. Thus, the Al content when present is 0.01% or more. Thus, the Al content is 0.1% or less, and when present in the range of 0.01% to 0.1%.

N: 0.008% or less

A high N content results in an increase in the amount of nitride, which causes deterioration in the quality of the material. Thus, the highest N content is 0.008%.

The remainder are Fe and incidental impurities.

In order to improve quenching hardenability and strength, a high-strength galvanized steel sheet according to the present invention may further contain at least one element selected from the group consisting of Cr: 0.05% or more and 1.0% or less, V: 0.005% or more and 0.5% or less, Mo: 0.005% or more and 0.5% or less, B: 0.0003% or more and 0.005% or less, Ni: 0.05% or more and 1.0% or less, and Cu: 0.05% or more and 1.0% or less. At an element content below the corresponding lower limit, desired effects cannot be produced. An element content above the corresponding upper limit results in an increase in the area ratio of the martensite phase and poor anti-burring performance. Thus, the lower limit and the upper limit of each element are specified as described above.

In order to control the grain size and thereby control the strength and the quality of the material, a high-strength galvanized steel sheet according to the present invention may contain at least one element selected from the group consisting of Ti: 0.01% or more and 0.1% or less and Nb: 0.01% or more and 0.1% or less. At an element content below the corresponding lower limit, desired effects cannot be produced. An element content above the corresponding upper limit results in not only the saturation of the effects but also nonuniform dispersion of a precipitate, nonuniform work hardening, and poor anti-burring performance. Thus, the lower limit and the upper limit of each element are specified as described above.

A high-strength galvanized steel sheet according to the present invention may contain at least one of the following elements.

Ta: 0.001% to 0.010%, Sn: 0.002% to 0.2%

Like Ti or Nb, Ta can form an alloy carbide or an alloy carbonitride and contribute to high strength. In addition, Ta can partly dissolve in Nb carbide or Nb carbonitride and form a composite precipitate, such as (Nb,Ta)(C,N). Thus, Ta can significantly reduce the coarsening of a precipitate and is effective in preventing an increase in the number of starting points of burrs in punching or shearing. Thus, if present, the Ta content is desirably 0.001% or more. However, an excessive addition of Ta results in the saturation of a precipitate stabilizing effect and increases alloy cost. Thus, if present, the Ta content is desirably 0.010% or less.

Sn can prevent nitriding or oxidation of the surface of a steel sheet and decarbonization of a region having a thickness of several tens of micrometers in an oxidized steel sheet surface layer. Such prevention of nitriding or oxidation is effective in preventing an increase in the number of starting points of burrs in punching or shearing. When Sn is added to prevent nitriding or oxidation, the Sn content is desirably 0.002% or more. However, more than 0.2% Sn results in low toughness. Thus, the Sn content is desirably 0.2% or less.

Sb: 0.002 to 0.2%

Like Sn, Sb can prevent nitriding or oxidation of the surface of a steel sheet or decarbonization of a region having a thickness of several tens of micrometers in an oxidized steel sheet surface layer. Such prevention of nitriding or oxidation is effective in preventing an increase in the number of starting points of burrs in punching or shearing. When Sb is added to prevent nitriding or oxidation, the Sb content is desirably 0.002% or more. However, more than 0.2% Sb results in low toughness. Thus, the Sn content is desirably 0.2% or less.

2. Constituents

The following are the reasons for limiting the constituents.

As described above, the anti-burring performance of a high-strength galvanized steel sheet can be improved when the high-strength galvanized steel sheet contains ferrite having a high work hardening rate that contains Si as a main constituent, the area ratio of a martensite phase is reduced, and the area ratio of a bainitic ferrite and pearlite structure is controlled.

The main constituent of ferrite having a high work hardening rate can effectively reduce the occurrence of burrs. When the area ratio of a ferrite phase is less than 75%, desired effects cannot be produced. Thus, the area ratio of a ferrite phase is limited to 75% or more. As the deformation proceeds, the incorporation of a martensite phase induces transition preferentially in an interface between the martensite phase and the ferrite phase because of a hardness difference therebetween, making the work hardening distribution nonuniform and causing deterioration of anti-burring performance. Thus, the martensite phase is limited to less than 5% (area ratio). The present invention actively employs a bainitic ferrite phase, which has lower hardness than a martensite phase, in order to increase strength. Thus, the bainitic ferrite phase is 1% or more (area ratio) in order to increase strength. A pearlite phase, which also has lower hardness than the martensite phase, is an important constituent in the present invention. When the pearlite phase constitutes less than 1%, desired strength cannot be obtained. Thus, the lower limit of the pearlite phase should be 1% (area ratio). However, pearlite tends to exhibit brittle fracture. A high area ratio of the pearlite phase therefore results in a high burr height. Thus, the upper limit of the area ratio of the pearlite phase should be 10%.

While the area ratios of the martensite phase, the bainitic ferrite phase, and the pearlite phase are specified as described above, these area ratios must be controlled to satisfy the relationship of the area ratio of the martensite phase/(the area ratio of the bainitic ferrite phase + the area ratio of the pearlite phase) $\leq 0.5$ so as to improve the anti-burring performance of the entire steel sheet.

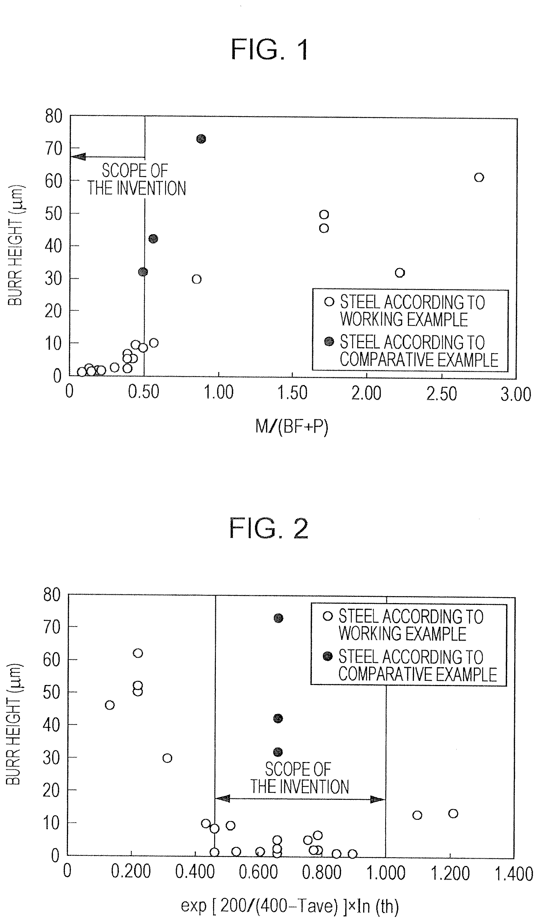

Fig. 1 is a graph showing the effect of the constituent ratio on the burr height of galvanized steel sheets described in the examples (described below). In Fig. 1, M/(BF+P) denotes the area ratio of the martensite phase/(the area ratio of the bainitic ferrite phase + the area ratio of the pearlite phase). Fig. 1 shows that steel containing chemical compositions controlled within the scope of the present invention satisfactorily has an average burr height of 10 $\mu$m or less when the area ratio of the martensite phase/(the area ratio of the bainitic ferrite phase + the area ratio of the pearlite phase) is 0.5 or less. In contrast, when the area ratio of the martensite phase/(the area ratio of the bainitic ferrite phase + the area ratio of the pearlite phase) is more than 0.5, the anti-burring performance deteriorates. This is because of an excessively high relative ratio of the martensite phase. On the basis of these results, in the present invention, the area ratio of the martensite phase/(the area ratio of the bainitic ferrite phase + the area ratio of the pearlite phase) should be 0.5 or less.

With respect to other constituents, a high Si content tends to result in an increased amount of retained austenite phase. However, when the area ratios of the ferrite phase, the bainitic ferrite phase, the pearlite phase, and the martensite phase are within the range described above and when the area ratio of the martensite phase/(the area ratio of the bainitic ferrite phase + the area ratio of the pearlite phase) is within the scope of the present invention, retained austenite does not reduce the advantages of the present invention.

3. Manufacturing Conditions

A method for manufacturing a high-strength galvanized steel sheet according to the present invention will be described below.

A steel slab containing chemical compositions controlled within the ranges described above is hot-rolled, pickled, and if necessary cold-rolled. The structure of the resulting steel sheet is controlled in a continuous galvanizing line.

In the continuous galvanizing line, a pickled hot-rolled steel sheet or a cold-rolled steel sheet is heated to a temperature in the range of 750°C to 900°C, at which an austenite phase can be formed. In order to provide a uniform recrystallized structure and a reverse-transformed structure, the steel sheet is heated to a temperature of 650°C or more at an average heating rate of 5°C/s or more and is held at a temperature (soaking temperature) in the range of 750°C to 900°C for 15 to 600 seconds. A deviation from these upper and lower limits of the average heating rate, the soaking temperature, and the holding time results in a nonuniform particle size distribution and deterioration of anti-burring performance. Thus, the upper and lower limits are specified as described above.

The steel sheet cooled to a temperature in the range of 450°C to 550°C, is held at that temperature for 10 to 200 seconds, and is galvanized. The holding temperature and the holding time after cooling affect the formation of the bainitic ferrite phase. The bainitic ferrite phase cannot be formed at a holding temperature outside the temperature range described above. The bainitic ferrite phase is less than 1% at a holding time of less than 10 seconds. A holding time of more than 200 seconds results in the saturation of the area ratio of the bainitic ferrite phase and reduced productivity. Thus, the holding time is in the range of 10 to 200 seconds.

The cooling rate after the temperature is held in the range of 750°C to 900°C is not particularly specified. High speed cooling close to 100°C/s or stepwise cooling may be employed provided that the area ratio of the ferrite phase can be controlled within a desired range.

The galvanizing is followed by alloying. In order to reduce the area ratio of the martensite phase to less than 5% and provide a desired area ratio of the pearlite phase, alloying is performed at a temperature in the range of 500°C to 600°C under the following condition:

$$0.45 \leq \exp[200/(400 - \text{Tave})] \times \ln(\text{th}) \leq 1.0$$

wherein Tave denotes the average holding temperature (°C), and th denotes the holding time (s).

Exp(X) and ln(X) represent the exponential function and the natural logarithm of X, respectively.

Fig. 2 is a graph showing the burr height as a function of a holding condition at a temperature in the range of 500°C to 600°C in alloying.

Fig. 2 shows that alloying of steel containing components within the scope of the present invention at a temperature in the range of 500°C to 600°C under the following condition provides excellent anti-burring performance with a burr height of 10 μm or less: $0.45 \leq \exp[200/(400 - \text{Tave})] \times \ln(\text{th}) \leq 1.0$, wherein Tave denotes the average holding temperature (°C), and th denotes the holding time (s). Thus, in the present invention, $\exp[200/(400 - \text{Tave})] \times \ln(\text{th})$ satisfies the formula described above.

When $\exp[200/(400 - \text{Tave})] \times \ln(\text{th})$ is less than 0.45, holding at the temperature cannot sufficiently transform an austenite phase into a pearlite phase. On the other hand, when $\exp[200/(400 - \text{Tave})] \times \ln(\text{th})$ is more than 1.0, an austenite phase is excessively transformed into a pearlite phase, and the area ratio of the pearlite phase in the end product exceeds 10%. This results in poor anti-burring performance.

A coating layer is alloyed at a temperature in the range of 500°C to 600°C so that the coating layer can have appropriate Fe%.

In the present invention, during hot rolling, cooling of more than 100°C/s may be employed in runout cooling in order to make the structure uniform. Variations in heating temperature, finishing temperature, coiling temperature, or cold rolling reduction in hot rolling do not significantly affect the advantages of the present invention. More specifically, a heating temperature in the range of 1100°C to 1300°C, a finishing temperature in the range of 800°C to 950°C, a coiling temperature in the range of 400°C to 650°C, or a cold rolling reduction in the range of 25% to 80% in hot rolling does not affect the advantages of the present invention.

Variations in the casting method, such as continuous casting or ingot casting, or slab thermal history, such as slab hot direct rolling or furnace heating material, do not reduce the advantages of the present invention. The formation or application of a film on a coating surface of a steel sheet according to the present invention so as to impart lubricity or functionality to the steel sheet does not affect the performance of the steel sheet.

[EXAMPLES]

Eighteen types of steel A to N containing chemical compositions according to the present invention and steel a to d containing chemical compositions according to comparative examples shown in Table 1 were adjusted with respect to their chemical compositions in a converter, were cast, and were hot-rolled. In hot rolling, the finishing temperature was in the range of 890°C to 960°C, and the coiling temperature was in the range of 450°C to 650°C. The hot-rolled sheets were pickled and were, directly or after cold rolling, subjected to heat treatment and coating in a continuous galvanizing line (CGL) under conditions shown in Table 2. The amount of coating was in the range of 35 to 45 g/m² per side.

The tensile strength of the galvanized steel sheets was measured.

The area ratios of ferrite, bainitic ferrite, pearlite, and martensite phases in the galvanized steel sheet were determined by polishing a vertical cross section parallel to the rolling direction of the steel sheet, etching the cross section with 3% nital, observing 10 visual fields with a scanning electron microscope (SEM) at a magnification ratio of 2000, and performing image processing with Image-Pro available from Media Cybernetics.

The ratio of the integrated X-ray diffraction intensity of {200}, {220}, and {311} planes in fcc iron to the integrated X-ray diffraction intensity of {200}, {211}, and {220} planes in bcc iron at a quarter thickness using a Mo-Kα line source was measured and was considered to be the area ratio of a retained austenite phase.

A tensile test was performed to measure the tensile strength (TS) of a JIS No. 5 specimen in accordance with Japanese Industrial Standards (JIS Z 2241) such that the tensile direction was perpendicular to the rolling direction of a steel sheet.

The burr heights of 10 circular end faces having a diameter of 50 mm punched from each galvanized steel sheet at a clearance of 12% defined by the following equation were measured to determine the average burr height.

$$\text{Punching clearance (\%)} = \{(D_d - D_p)/2t\} \times 100$$

$D_d$ denotes the inner diameter of a die (mm), $D_p$ denotes the diameter of a punch (mm), and t denotes the thickness of a steel sheet (mm).

Table 2 shows the results.

[Table 1]

| Table 1 | | | | | | | | | | | | | | | | | | | Note |
|---|---|---|---|---|---|---|---|---|---|---|---|---|---|---|---|---|---|---|---|
| Steel type | Components (mass%) | | | | | | | | | | | | | | | | | | Note |
| | C | Si | Mn | P | S | Al | N | Cr | v | Mo | Nb | Ti | B | Ni | Cu | Ta | Sn | Sb | |
| A | 0.065 | 1.5 | 1.6 | 0.030 | 0.0012 | 0.020 | 0.0025 | | | | | | | | | | | | Working example |
| B | 0.065 | 1.5 | 1.3 | 0.015 | 0.0024 | 0.031 | 0.0014 | | | | | | | | | | | | Working example |
| C | 0.063 | 2.3 | 0.8 | 0.020 | 0.0010 | 0.014 | 0.0023 | | | | | | | | | | | | Working example |
| D | 0.065 | 1.0 | 1.7 | 0.025 | 0.0031 | 0.019 | 0.0025 | 0.3 | | | | | | | | | | | Working example |
| E | 0.040 | 1.3 | 2.0 | 0.010 | 0.0078 | 0.020 | 0.0036 | | 0.1 | | | | | | | | | | Working example |
| F | 0.082 | 1.8 | 1.7 | 0.026 | 0.0033 | 0.021 | 0.0044 | | | 0.1 | | | | | | | | | Working example |
| G | 0.120 | 2.0 | 1.4 | 0.030 | 0.0018 | 0.032 | 0.0036 | | | | 0.02 | | | | | | | | Working example |
| H | 0.052 | 1.6 | 1.6 | 0.015 | 0.0046 | 0.012 | 0.0021 | | | | | 0.02 | | | | | | | Working example |
| I | 0.095 | 1.5 | 1.4 | 0.032 | 0.0021 | 0.024 | 0.0020 | | | | | | 0.0009 | | | | | | Working example |
| J | 0.073 | 1.2 | 1.6 | 0.015 | 0.0036 | 0.042 | 0.0033 | | | | | | | 0.2 | 0.2 | | | | Working example |
| a | 0.110 | 0.6 | 1.5 | 0.021 | 0.0033 | 0.030 | 0.0016 | | | | | | | | | | | | Comparative example |
| b | _0.140_ | 1.5 | 1.6 | 0.020 | 0.0058 | 0.036 | 0.0021 | | | | | | | | | | | | Comparative example |
| c | 0.068 | 1.5 | _2.2_ | 0.012 | 0.0021 | 0.028 | 0.0030 | | | | | | | | | | | | Comparative example |
| d | 0.082 | 1.5 | 1.5 | 0.030 | 0.0006 | 0.021 | 0.0019 | | | | | | | | | | | | Comparative example |
| K | 0.085 | 1.2 | 1.0 | 0.013 | 0.0011 | 0.022 | 0.0025 | | | | 0.015 | | | | | 0.008 | | | Working example |
| L | 0.090 | 1.5 | 1.5 | 0.006 | 0.0045 | 0.045 | 0.0031 | | | | 0.015 | | | | | | 0.006 | | Working example |
| M | 0.074 | 1.0 | 1.2 | 0.032 | 0.0031 | 0.036 | 0.0016 | | | | | | | | | 0.005 | | | Working example |
| N | 0.110 | 2.0 | 1.4 | 0.050 | 0.0026 | 0.010 | 0.0073 | | | | | | | | | | | 0.01 | Working example |
| | Underlined values ar e out of the scope of the present invention. | | | | | | | | | | | | | | | | | | |

[Table 2]

| Steel No. | Steel type | Cold-rolling reduction (%) | Thickness (mm) | Continuous galvanizing conditions | | | | | | | | Structure (area ratio/%) | | | | | | Characteristics | | Note |
|---|---|---|---|---|---|---|---|---|---|---|---|---|---|---|---|---|---|---|---|---|
| | | | | Heating temperature (°C) | Heating rate (°C/s) | Soaking temperature (°C) | Soaking time (s) | Holding time at 450-550°C (s) | Alloying Average holding temperature Tave (°C) | Alloying Holding time th(s) | exp[(200/(400-Tave)]×ln(th) | F Ferrite | BF Bainitic ferrite | P Pearlite | M Martensite | RA Retained austenite | M/(BF+P) | TS (MPa) | Average burr height (μm) | |
| 1 | A | 60 | 1.4 | 730 | 10 | 800 | 200 | 20 | 500 | 10 | 0.312 | 85 | 6 | 1 | 6 | 2 | 0.86 | 623 | 30.0 | Comparative example |
| 2 | A | 60 | 1.4 | 730 | 10 | 800 | 200 | 20 | 520 | 10 | 0.435 | 85 | 6 | 1 | 4 | 4 | 0.57 | 610 | 11.0 | Comparative example |
| 3 | A | 60 | 1.4 | 690 | 10 | 750 | 200 | 180 | 550 | 10 | 0.607 | 85 | 5 | 3 | 3 | 4 | 0.38 | 600 | 5.0 | Working example |
| 4 | A | 60 | 1.4 | 780 | 10 | 850 | 200 | 20 | 550 | 10 | 0.607 | 85 | 7 | 3 | 2 | 3 | 0.20 | 610 | 1.0 | Working example |
| 5 | A | 60 | 1.4 | 730 | 10 | 800 | 200 | 20 | 550 | 10 | 0.607 | 85 | 6 | 4 | 2 | 3 | 0.20 | 600 | 1.5 | Working example |
| 6 | A | 60 | 1.4 | 730 | 10 | 800 | 200 | 20 | 550 | 20 | 0.790 | 85 | 6 | 5 | 1.5 | 2.5 | 0.14 | 595 | 2.0 | Working example |
| 7 | A | 60 | 1.4 | 730 | 10 | 800 | 200 | 20 | 550 | 30 | 0.897 | 85 | 6 | 6 | 1 | 2 | 0.08 | 590 | 1.0 | Working example |
| 8 | A | 60 | 1.4 | 730 | 10 | 800 | 200 | 20 | 560 | 5 | 0.461 | 85 | 6 | 4 | 1.5 | 3.5 | 0.15 | 605 | 1.2 | Working example |
| 9 | A | - | 2.0 | 730 | 8 | 800 | 300 | 20 | 560 | 10 | 0.660 | 85 | 6 | 5 | 1 | 3 | 0.09 | 598 | 0.9 | Working example |
| 10 | A | 60 | 1.4 | 730 | 10 | 800 | 200 | 20 | 600 | 10 | 0.847 | 85 | 6 | 5 | 1 | 3 | 0.09 | 590 | 0.8 | Working example |
| 11 | A | 60 | 1.4 | 730 | 10 | 800 | 200 | 20 | 600 | 20 | 1.102 | 90 | 0 | 9 | 1 | 0 | 0.11 | 575 | 13.0 | Comparative example |
| 12 | B | 60 | 1.4 | 730 | 10 | 800 | 200 | 20 | 480 | 5 | 0.132 | 80 | 7 | 0 | 12 | 1 | 1.71 | 650 | 46.0 | Comparative example |
| 13 | B | 60 | 1.4 | 730 | 10 | 800 | 200 | 20 | 500 | 5 | 0.218 | 80 | 7 | 0 | 12 | 1 | 1.71 | 645 | 50.0 | Comparative example |
| 14 | B | 60 | 1.4 | 730 | 10 | 800 | 200 | 20 | 520 | 15 | 0.511 | 80 | 7 | 4 | 4 | 5 | 0.36 | 632 | 9.5 | Working example |
| 15 | C | 60 | 1.4 | 730 | 10 | 800 | 200 | 20 | 560 | 5 | 0.461 | 90 | 5 | 1 | 3 | 1 | 0.50 | 660 | 8.6 | Working example |
| 16 | C | 60 | 1.4 | 700 | 10 | 780 | 200 | 20 | 560 | 5 | 0.461 | 90 | 4 | 2 | 2 | 2 | 0.33 | 645 | 4.3 | Working example |
| 17 | C | 60 | 1.4 | 680 | 10 | 780 | 200 | 20 | 560 | 5 | 0.461 | 90 | 4 | 2 | 1 | 3 | 0.17 | 640 | 1.2 | Working example |
| 18 | D | 60 | 1.4 | 730 | 10 | 800 | 200 | 20 | 500 | 5 | 0.218 | 78 | 4 | 0 | 17 | 1 | 4.25 | 650 | 52.0 | Comparative example |
| 19 | D | 60 | 1.4 | 730 | 10 | 800 | 200 | 5 | 560 | 10 | 0.660 | 75 | 0 | 2 | 23 | 0 | 11.50 | 670 | 72.0 | Comparative example |
| 20 | D | 60 | 1.4 | 730 | 10 | 800 | 200 | 20 | 550 | 20 | 0.790 | 85 | 4 | 6 | 4 | 1 | 0.40 | 650 | 6.5 | Working example |
| 21 | D | 60 | 1.4 | 730 | 10 | 800 | 200 | 20 | 500 | 5 | 0.218 | 85 | 4 | 0 | 11 | 0 | 2.75 | 660 | 62.0 | Comparative example |
| 22 | D | 60 | 1.4 | 730 | 10 | 760 | 200 | 20 | 580 | 10 | 0.758 | 88 | 3 | 4 | 3 | 2 | 0.43 | 645 | 6.2 | Working example |
| 23 | D | 60 | 1.4 | 730 | 10 | 770 | 200 | 20 | 580 | 10 | 0.758 | 87 | 3 | 4 | 2 | 4 | 0.29 | 650 | 1.3 | Working example |
| 24 | E | 60 | 1.4 | 730 | 10 | 800 | 200 | 20 | 580 | 10 | 0.758 | 90 | 5 | 2 | 3 | 0 | 0.43 | 580 | 5.2 | Working example |
| 25 | F | 60 | 1.4 | 730 | 10 | 800 | 200 | 20 | 560 | 15 | 0.776 | 86 | 6 | 4 | 4 | 0 | 0.40 | 665 | 2.1 | Working example |
| 26 | G | 60 | 1.4 | 730 | 10 | 800 | 200 | 20 | 560 | 10 | 0.660 | 75 | 6 | 10 | 4 | 5 | 0.25 | 800 | 2.5 | Working example |
| 27 | G | 60 | 1.4 | 730 | 10 | 830 | 200 | 20 | 560 | 10 | 0.660 | 75 | 7 | 6 | 4 | 8 | 0.31 | 803 | 6.0 | Working example |
| 28 | G | 60 | 1.4 | 730 | 10 | 850 | 200 | 20 | 560 | 10 | 0.660 | 75 | 8 | 7 | 4 | 6 | 0.27 | 801 | 4.2 | Working example |
| 29 | H | 60 | 1.4 | 730 | 10 | 800 | 200 | 20 | 560 | 10 | 0.660 | 92 | 3 | 2 | 2 | 1 | 0.40 | 610 | 5.0 | Working example |
| 30 | I | 60 | 1.4 | 730 | 10 | 800 | 200 | 20 | 580 | 40 | 1.214 | 80 | 3 | 15 | 1 | 1 | 0.06 | 575 | 13.5 | Comparative example |
| 31 | I | 60 | 1.4 | 730 | 10 | 800 | 200 | 20 | 580 | 20 | 0.986 | 80 | 3 | 9 | 1 | 7 | 0.08 | 575 | 1.0 | Working example |
| 32 | J | 60 | 1.4 | 730 | 10 | 800 | 200 | 20 | 580 | 5 | 0.530 | 88 | 4 | 5 | 2 | 1 | 0.22 | 633 | 1.5 | Working example |
| 33 | K | 60 | 1.4 | 650 | 10 | 770 | 200 | 20 | 580 | 5 | 0.530 | 85 | 3 | 4 | 3 | 5 | 0.43 | 600 | 5.2 | Working example |
| 34 | L | 60 | 1.4 | 730 | 10 | 760 | 200 | 100 | 580 | 5 | 0.530 | 82 | 3 | 6 | 3 | 6 | 0.33 | 642 | 5.0 | Working example |
| 35 | M | 60 | 1.4 | 730 | 10 | 830 | 200 | 20 | 580 | 5 | 0.530 | 80 | 6 | 6 | 3 | 5 | 0.25 | 623 | 3.2 | Working example |
| 36 | N | 60 | 1.4 | 730 | 10 | 840 | 200 | 20 | 580 | 5 | 0.530 | 78 | 7 | 5 | 4 | 6 | 0.33 | 652 | 8.1 | Working example |
| 37 | a | 60 | 1.4 | 730 | 10 | 800 | 200 | 20 | 560 | 10 | 0.660 | 75 | 8 | 8 | 9 | 0 | 0.56 | 668 | 42.3 | Comparative example |
| 38 | b | 60 | 1.4 | 730 | 10 | 800 | 200 | 20 | 560 | 10 | 0.660 | 65 | 5 | 12 | 15 | 3 | 0.88 | 820 | 73.0 | Comparative example |
| 39 | c | 60 | 1.4 | 730 | 10 | 800 | 200 | 20 | 560 | 10 | 0.660 | 70 | 2 | 2 | 25 | 1 | 6.25 | 750 | 102.0 | Comparative example |
| 40 | d | 60 | 1.4 | 730 | 10 | 800 | 200 | 20 | 560 | 10 | 0.660 | 80 | 5 | 7 | 6 | 2 | 0.50 | 662 | 32.0 | Comparative example |

Underlined values are out of the scope of the present invention.

The galvanized steel sheets according to the working examples have a tensile strength of 550 MPa or more and an average burr height of 10 μm or less, and are considered to be high-strength galvanized steel sheets having excellent anti-burring performance. In contrast, the galvanized steel sheets according to the comparative examples have an average burr height of more than 10 μm and are considered to be high-strength galvanized steel sheets having poor anti-burring performance.

[Industrial Applicability]

The present invention can provide a high-strength galvanized steel sheet that has excellent anti-burring performance with a low burr height in punching or shearing and has a tensile strength of 550 MPa or more. Without positive addition of S or P, a galvanized steel sheet according to the present invention has satisfactory weldability. Thus, a galvanized steel sheet according to the present invention is suitable for applications that require anti-burring performance or anti-burring performance and weldability, such as automobiles and household electrical appliances.

## Claims

1. A high-strength galvanized and alloyed steel sheet having a tensile strength of 550 MPa or more and excellent anti-burring performance, consisting of: C: 0.04% or more and 0.13% or less, Si: 1.0% or more and 2.3% or less, Mn: 0.8% or more and 2.0% or less, P: 0.05% or less, S: 0.0010% or more and 0.01% or less, optionally Al: 0.01 to 0.1%, N: 0.008% or less on a mass percent basis, and optionally one or more of Cr: 0.05% or more and 1.0% or less, V: 0.005% or more and 0.5% or less, Mo: 0.005% or more and 0.5% or less, B: 0.0003% or more and 0.005% or less, Ni: 0.05% or more and 1.0% or less, Cu: 0.05% or more and 1.0% or less, Ti: 0.01% or more and 0.1% or less, Nb: 0.01% or more and 0.1% or less, Ta: 0.001% or more and 0.010% or less, Sn: 0.002% or more and 0.2% or less, Sb: 0.002% or more and 0.2% or less on a mass percent basis, and the remainder of Fe and incidental impurities, wherein a ferrite phase constitutes 75% or more, a bainitic ferrite phase constitutes 1% or more, a pearlite phase constitutes 1% or more and 10% or less, and a martensite phase constitutes less than 5% on an area ratio basis, and the area ratio of the martensite phase/(the area ratio of the bainitic ferrite phase + the area ratio of the pearlite phase) is 0.5 or less, with the exception of the steel sheets 1, 3-8, 12, 14, 23-28, 30-35, 37, 39, 41-46, 48-53 according to EP 2 402 470 A1.

2. A method for manufacturing a high-strength galvanized and alloyed steel sheet according to Claim 1 having excellent anti-burring performance, comprising: hot rolling, pickling, and if necessary cold rolling a steel slab having the composition described in Claim 1 to form a steel sheet, heating the steel sheet to a temperature of 650°C or more at an average heating rate of 5°C/s or more, holding the steel sheet at a temperature in the range of 750°C to 900°C for 15 to 600 seconds, cooling the steel sheet to a temperature in the range of 450°C to 550°C, holding the steel sheet at a temperature in the range of 450 °C to 550 °C for 10 to 200 seconds, galvanizing the steel sheet, and alloying the galvanized steel sheet at a temperature in the range of 500 °C to 600 °C under conditions satisfying the following formula :

$$0.45 \leq \exp[200/(400 - Tave)] \times \ln(th) \leq 1.0$$

wherein Tave denotes the average holding temperature in °C, and th denotes the holding time in seconds.

**Patentansprüche**

1. Hochfestes verzinktes und legiertes Stahlblech mit einer Zugfestigkeit von 550 MPa oder mehr und hervorragendem Gratreduzierungs-Verhalten, das, in Masse-%, aus: 0,04 % oder mehr und 0,13 % oder weniger C, 1,0 % oder mehr und 2,3 % oder weniger Si, 0,8 % oder mehr und 2,0 % oder weniger Mn, 0,05 % oder weniger P, 0,0010 % oder mehr und 0,01 % oder weniger S, optional, in Masse-%, 0,01 bis 0,1 % Al, 0,008 % oder weniger N sowie optional, in Masse-%, einem oder mehreren der folgenden Elemente: 0,05 % oder mehr und 1,0 % oder weniger Cr, 0,005 % oder mehr und 0,5 % oder weniger V, 0,005 % oder mehr und 0,5 % oder weniger Mo, 0,0003 % oder mehr und 0,005 % oder weniger B, 0,05 % oder mehr und 1,0 % oder weniger Ni, 0,05 % oder mehr und 1,0 % oder weniger Cu, 0,01 % oder mehr und 0,1 % oder weniger Ti, 0,01 % oder mehr und 0,1 % oder weniger Nb, 0,001 % oder mehr und 0,010 % oder weniger Ta, 0,002 % oder mehr und 0,2 % oder weniger Sn, 0,002 % oder mehr und 0,2 % oder weniger Sb besteht, wobei der Rest Fe und zufällige Verunreinigungen sind und, in Bezug auf einen Flächenanteil, eine Ferrit-Phase 75 % oder mehr ausmacht, eine bainitische Ferrit-Phase 1 % oder mehr ausmacht, eine Perlit-Phase 1 % oder mehr und 10 % oder weniger ausmacht und eine Martensit-Phase weniger als 5 % ausmacht und der Flächenanteil der Martensit-Phase/(der Flächenanteil der bainitischen Ferrit-Phase + der Flächenanteil der Perlit-Phase) 0,5 oder weniger beträgt,
wobei die Stahlbleche 1, 3-8, 12, 14, 23-28, 30-35, 37, 39, 41-46, 48-53 gemäß EP 2 402 470 A1 eine Ausnahme bilden.

2. Verfahren zum Herstellen eines hochfesten verzinkten und legierten Stahlblechs nach Anspruch 1 mit hervorragendem Gratreduzierungs-Verhalten, das umfasst: Warmwalzen, Beizen und, falls erforderlich, Kaltwalzen einer Stahlbramme mit der in Anspruch 1 beschriebenen Zusammensetzung zum Ausbilden eines Stahlblechs, Erwärmen des Stahlblechs auf eine Temperatur von 650 °C oder darüber bei einer durchschnittlichen Erwärmungsgeschwindigkeit von 5 °C/s oder mehr, Halten des Stahlblechs auf einer Temperatur in dem Bereich von 750 °C bis 900 °C über 15 bis 600 s, Abkühlen des Stahlblechs auf eine Temperatur im Bereich von 450 °C bis 550 °C, Halten des Stahlblechs auf einer Temperatur im Bereich von 450 °C bis 550 °C über 10 bis 200 s, Verzinken des Stahlblechs und Legieren des verzinkten Stahlblechs bei einer Temperatur im Bereich von 500 °C bis 600 °C unter Bedingungen, für die die folgende Formel gilt:

$$0,45 \leq \exp[200/(400 - Tave)] \times \ln(th) \leq 1,0$$

wobei Tave die durchschnittliche Haltetemperatur in °C bezeichnet, und th die Haltezeit in s bezeichnet.

**Revendications**

1. Tôle d'acier galvanisée et alliée de haute résistance ayant une résistance à la traction de 550 MPa ou plus et d'excellentes performances anti-bavures, constituée de : C : 0,04 % ou plus et 0,13 % ou moins, Si : 1,0 % ou plus et 2,3 % ou moins, Mn : 0,8 % ou plus et 2,0 % ou moins, P : 0,05 % ou moins, S : 0,0010 % ou plus et 0,01 % ou moins, éventuellement Al : 0,01 à 0,1 %, N : 0,008 % ou moins sur une base de pourcentage massique, et éventuellement un ou plusieurs éléments parmi Cr : 0,05 % ou plus et 1,0 % ou moins, V : 0,005 % ou plus et 0,5 % ou moins, Mo : 0,005 % ou plus et 0,5 % ou moins, B : 0,0003 % ou plus et 0,005 % ou moins, Ni : 0,05 % ou plus et 1,0 % ou moins, Cu : 0,05 % ou plus et 1,0 % ou moins, Ti : 0,01 % ou plus et 0,1 % ou moins, Nb : 0,01 % ou plus et 1,0 % ou moins, Ta : 0,001 % ou plus et 0,010 % ou moins, Sn : 0,002 % ou plus et 0,2 % ou moins, Sb : 0,002 % ou plus et 0,2 % ou moins sur une base de pourcentage massique, le reste étant du Fe et des impuretés inévitables, dans laquelle une phase de ferrite constitue 75 % ou plus, une phase de ferrite bainitique constitue 1 % ou plus, une phase de perlite constitue 1 % ou plus et 10 % ou moins, et une phase de martensite constitue moins de 5 % sur une base de rapport surfacique, et le rapport surfacique de la phase de martensite / (le rapport surfacique de la phase de ferrite bainitique + le rapport surfacique de la phase de perlite) est inférieur ou égal à 0,5, à l'exception des tôles d'acier 1, 3 à 8, 12, 14, 23 à 28, 30 à 35, 37, 39, 41 à 46, 48 à 53 selon la demande EP 2 402 470 A1.

2. Procédé de fabrication d'une tôle d'acier galvanisée et alliée de haute résistance selon la revendication 1 ayant d'excellentes performances anti-bavures, comprenant : le laminage à chaud, le décapage et si nécessaire le laminage à froid d'une brame d'acier ayant la composition décrite à la revendication 1 pour former une tôle d'acier, le chauffage de la tôle d'acier à une température de 650 °C ou plus à une vitesse moyenne de chauffage de 5 °C/s ou plus, le maintien de la tôle d'acier à une température dans la plage de 750 °C à 900 °C pendant 15 à 600 secondes, le refroidissement de la tôle d'acier à une température dans la plage de 450 °C à 550 °C, le maintien de la tôle d'acier à une température dans la plage de 450 °C à 550 °C pendant 10 à 200 secondes, la galvanisation de la tôle d'acier et l'alliation de la tôle d'acier galvanisée à une température dans la plage de 500 °C à 600 °C dans des conditions satisfaisant la formule suivante :

$$0,45 \leq \exp[200/(400 - Tave)] \times \ln(th) \leq 1,0$$

dans laquelle Tave représente la température de maintien moyenne en °C et th représente le temps de maintien en secondes.

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1230748 A
- JP 4120242 A
- JP 6073457 A
- WO 2010098416 A1
- EP 2402470 A1
- JP 2008291304 A